# EUROPÄISCHE PATENTSCHRIFT

(11) **EP 3 838 455 B1**
(45) Veröffentlichungstag und Bekanntmachung des Hinweises auf die Patenterteilung: **28.10.2026**
(21) Anmeldenummer: 19216972.0
(22) Anmeldetag: 17.12.2019
(51) Int. Cl.: B23B 27/16, B23B 29/20, B23B 1/00, B23Q 5/04

(54) **WERKZEUGSYSTEM**
TOOL SYSTEM
SYSTÈME D'OUTIL

(43) Veröffentlichungstag der Anmeldung: 23.06.2021
(73) Patentinhaber: Ceratizit Austria Gesellschaft m.b.H., 6600 Reutte (AT)
(72) Erfinder: SINGER-SCHNÖLLER, Alexander, 6600 Reutte (AT); URSCHITZ, Harald, 6600 Reutte (AT); TROST, Johannes, 6600 Reutte (AT)
(74) Vertreter: Ciesla, Dirk

(56) Entgegenhaltungen:
- EP-A1- 3 246 125
- EP-A1- 3 501 701
- WO-A1-2004/022270
- WO-A1-2011/029944
- DE-A1- 10 306 845
- DE-A1- 19 940 330
- DE-C1- 19 958 461
- US-A- 4 785 513

## Beschreibung

Die vorliegende Erfindung betrifft ein Werkzeugsystem zur spanenden Bearbeitung, insbesondere zur Drehbearbeitung, sowie ein Verfahren zur Bearbeitung eines Werkstücks. Ein derartiges Werkzeugsystem sowie ein entsprechendes Verfahren sind aus EP3246125A1 bekannt.

Häufig sind für eine Komplettbearbeitung eines Werkstücks mehrere Zerspanungsoperationen erforderlich, welche sich wenigstens bezüglich eines Anstellwinkels und / oder in Wendeschneidplatten unterscheiden.

Darüber hinaus werden häufig noch weitere Bearbeitungsschritte außerhalb einer Drehmitte des Werkstücks benötigt, wie etwa ein Planfräsen, Längs- und Querbohren etc.

Es sind also zur Komplettbearbeitung eines Werkstücks gegebenenfalls mehrere Werkzeugwechsel erforderlich. Typischerweise sind die Werkzeuge an einem Werkzeugträger mit mehreren Werkzeugplätzen angeordnet. Ein Beispiel für einen solchen Werkzeugträger ist ein Werkzeugrevolver (auch Revolver-Werkzeugträger genannt). Durch Drehen der Revolverscheibe kann das gerade benötigte Werkzeug in eine Einsatzposition geschwenkt werden.

In der Regel werden für die verschiedenen Bearbeitungsschritte unterschiedliche Werkzeuge benötigt. Werkzeugwechsel führen zu längeren Rüstzeiten.

Die WO2011029944A1 (INDEX WERKE KG HAHN) zeigt eine Vorrichtung und ein Verfahren zum drallfreien Drehen, wobei an einem Werkzeuggrundkörper an einer Schneidplattenaufnahme eine Schneidplatte eingesetzt ist. Bei dem beschriebenen Zerspanungsverfahren wird eine Werkzeugschneide mittels Drehung des Werkzeuggrundkörpers im Eingriff mit dem Werkstück verschwenkt, wodurch der Eingriffspunkt längs der Werkzeugschneide wandert. Dafür ist es vorgesehen, dass als Spanfläche eine Umfangsfläche der Schneidplatte ausgebildet ist.

Die EP3501701 (A1) der Anmelderin zeigt ein Werkzeugsystem zur Drehbearbeitung mit einem Werkzeugkörper, der sich entlang einer Längsachse erstreckt und ein erstes Ende zur Verbindung mit einer Bearbeitungsmaschine und ein zweites Ende mit einer Stirnseite, an der ein Sitz für einen Schneideinsatz ausgebildet ist, wobei der Schneideinsatz eine als Anlagefläche ausgebildete Unterseite und eine als Spanfläche ausgebildete Oberseite aufweist. Ein Verändern der Spanbildung erfolgt durch gesteuerte Drehung des Werkzeugkörpers um dessen Längsachse und damit koordinierte Translationsbewegung des Werkzeugkörpers in einer Ebene, die senkrecht zur Längsachse verläuft, mit einer Translationsbewegungskomponente senkrecht zur Werkstückachse.

Die EP3246125A1 (Vandurit) zeigt ein Werkzeugschwenkaggregat, welches in eine angetriebene Werkzeugaufnahme einbringbar ist. Beim dem darin gezeigten Drehverfahren wird ein hinteres Ende des Werkzeughalters um eine Achse geschwenkt, die sich senkrecht zu einer Längsachse des Werkzeughalters erstreckt.

Die WO2004022270A1 (Kennametal) zeigt eine Werkzeugmaschine, wobei ein Winkel zwischen Werkzeughalter und Werkstück korrigiert wird, wenn sich ein Bewegungsvektor mindestens einer der Linearachsen ändert. Eine Spanfläche des Schneidwerkzeugs kann dabei senkrecht zu einer Längsachse des Werkzeughalters sein.

Aufgabe der vorliegenden Erfindung ist es, die oben diskutierten Nachteile aus dem Stand der Technik zu überwinden.

Die Aufgabe wird erfüllt durch ein Werkzeugsystem mit den Merkmalen von Anspruch 1 sowie ein Verfahren mit den Merkmalen von Anspruch 7. Bevorzugte Weiterbildungen sind in den abhängigen Ansprüchen angegeben.

Ein erfindungsgemäßes Werkzeugsystem umfasst:
- einen maschinenseitigen Schaft, der in eine angetriebene Werkzeugaufnahme einbringbar ausgebildet ist, der maschinenseitige Schaft enthaltend ein Mittel zur Übertragung einer von der angetriebenen Werkzeugaufnahme abgreifbaren Drehbewegung,
- einen werkzeugseitigen Schaft, der als Werkzeughalter ausgebildet ist oder an dem ein Werkzeughalter lösbar verbunden ist,
- ein Getriebe angeordnet zwischen dem maschinenseitigen Schaft und dem werkzeugseitigen Schaft, welches Getriebe dazu ausgebildet ist, eine vom Mittel übertragene Drehbewegung untersetzt auf den werkzeugseitigen Schaft zu übertragen,
- wenigstens einen am Werkzeughalter ausgebildeten Plattensitz zur Aufnahme einer auswechselbaren Schneidplatte, welcher Plattensitz an einer sich quer zu einer Längsachse des Werkzeughalters erstreckenden Stirnseite des Werkzeughalters ausgebildet ist, wobei die Längsachse des werkzeugseitigen Schafts und die Längsachse des Werkzeughalters zusammenfallen oder wenigstens parallel zueinander verlaufen und der Werkzeughalter um die Längsachse des werkzeugseitigen Schafts dreh- oder schwenkbar ist, und wobei am Plattensitz eine auswechselbare Schneidplatte umfassend wenigstens eine Schneidecke mit einer als Spanfläche ausgebildeten Oberseite und einer als Anlagefläche ausgebildeten Unterseite angeordnet ist derart, dass die Oberseite der Schneidplatte sich quer zur Längsachse des Werkzeughalters erstreckt

Durch das erfindungsgemäße Werkzeugsystem wird die Möglichkeit geschaffen, eine Drehbewegung einer angetriebenen Werkzeugaufnahme untersetzt auf den werkzeugseitigen Schaft zu übertragen, um solchermaßen den am Werkzeughalter ausgebildeten Plattensitz zur Aufnahme einer auswechselbaren Schneidplatte rotatorisch zu verstellen.

In anderen Worten wird es ermöglicht, die eigentlich für einen Antrieb eines angetriebenen Werkzeugs vorgesehene Drehbewegung einer angetriebenen Werkzeugaufnahme für eine Feinverstellung eines Werkzeugs zu nutzen.

Klarheitshalber sei festgehalten, dass die Untersetzung derart erfolgt, dass eine maschinenseitige Drehzahl oder eine antriebsseitige Winkelbewegung verkleinert auf den werkzeugseitigen Schaft übertragen wird.

Durch die Untersetzung wird eine hohe Positioniergenauigkeit erreicht, denn eine Drehbewegung eines Antriebs der angetriebenen Werkzeugaufnahme um einen bestimmten Winkel wird um den Faktor der Untersetzung reduziert auf den werkzeugseitigen Schaft übertragen.

Durch die Untersetzung ist eine Selbsthemmung des Getriebes gegeben oder zumindest begünstigt.

Ein umgekehrter Momentenfluss, also vom Werkzeug in Richtung Antrieb, wird damit unterdrückt. Somit führen auf den werkzeugseitigen Schaft aufgeprägte Kräfte, beispielweise Zerspanungskräfte, nicht zu einer ungewünschten Verdrehung.

Auch setzt sich durch die Untersetzung ein etwaiges Spiel zwischen Werkzeughalter und maschinenseitigem Antrieb nur um den Faktor der Untersetzung auf den werkzeugseitigen Schaft fort.

Bevorzugt ist vorgesehen, dass eine vom maschinenseitigen Schaft übertragene Drehbewegung mit einer Untersetzung zwischen 50:1 bis 1000:1, bevorzugt zwischen 75:1 und 125:1, weiter bevorzugt etwa 100:1, auf den werkzeugseitigen Schaft zu übertragen. Mit "etwa 100:1" der besonders bevorzugten Ausführung sind auch Abweichungen von +/- 10% umfasst, also 90:1 bis 110:1.

Durch das bevorzugt hohe Maß der Untersetzung wird eine besonders hohe Positioniergenauigkeit erreicht.

Eine Untersetzung von bevorzugt etwa 100:1 bietet außerdem einen guten Kompromiss von Positioniergenauigkeit und Verstellgeschwindigkeit. Antriebe von angetriebenen Werkzeugaufnahmen weisen typischerweise Drehzahlen von 4000 bis 5000 U/min auf. Bei einer Untersetzung von 100:1 bedeutet dies Drehzahlen am werkzeugseitigen Schaft von 40 - 50 U/min.

In einer alternativen bevorzugten Ausführung weist das Getriebe eine Untersetzung von 120:1 auf. Durch diesen Faktor der Untersetzung, durch welchen 360° ganzzahlig teilbar ist, kann eine gewünschte ganzzahlige werkzeugseitige Winkeländerung besonders einfach programmiert werden: im genannten Beispiel einer bevorzugten Untersetzung von 120:1 bewirkt eine maschinenseitige Umdrehung (d.h. 360° im Gradmaß) eine werkzeugseitige Winkeländerung von 3° (360°/120).

Durch das bevorzugt hohe Maß an Untersetzung ist in der Regel eine Selbsthemmung gewährleistet.

Vorteilhaft ist auch, dass durch die Untersetzung der vom maschinenseitigen Schaft übertragenen Drehbewegung am werkzeugseitigen Schaft ein vergrößertes Drehmoment zur Verfügung steht.

Das erfindungsgemäße Werkzeugsystem erlaubt es beispielsweise, ein am werkzeugseitigen Schaft angeordnetes Werkzeug, etwa eine Schneidplatte, in eine andere Position zu bewegen, also zu verstellen. Mit einer anderen Position kann unter anderem eine Ausrichtung einer Schneidekante einer Schneidplatte gemeint sein. Dadurch kann dasselbe Werkzeug für einen anderen Bearbeitungsschritt genutzt werden, welcher Bearbeitungsschritt sich hinsichtlich der erforderlichen Schneidkantenausrichtung von der zuvor gewählten Einstellung des Werkzeugs unterscheidet. Als Beispiel sei ein Wechsel von einem Längsdrehen zu einem Plandrehen genannt.

Mit einer anderen Position kann auch gemeint sein, eine andere Schneidkante der Schneidplatte bereitzustellen. Dies ist insbesondere bei Schneidplatten relevant, die mehrere, teilweise unterschiedlich ausgebildete Schneiden aufweisen.

Somit wird mit dem das erfindungsgemäßen Werkzeugsystem beispielsweise für zwei oder sogar mehrere Bearbeitungsschritte nur ein einziger Platz an einem Werkzeugträger benötigt, wofür ohne das erfindungsgemäße Werkzeugsystem zwei oder sogar mehrere verschiedene Werkzeuge und damit Plätze am Werkzeugträger erforderlich wären.

Das erfindungsgemäße Werkzeugsystem erlaubt eine besonders wirtschaftliche Nutzung eines Werkzeugs, da gegebenenfalls dasselbe Werkzeug für verschiedene Bearbeitungsschritte genutzt werden kann.

Insbesondere ist das Getriebe spielfrei ausgebildet oder es kann ein Spielausgleich vorgesehen sein.

Insbesondere vorteilhaft ist es, wenn das Getriebe selbsthemmend ausgeführt ist. Das bedeutet, dass ein werkzeugseitig aufgeprägtes Moment nicht zu einer Verdrehung führt. Dies ist insbesondere vorteilhaft, um bei einem Revolverplatzwechsel die ursprüngliche Position nicht zu verlieren, sondern für einen nachfolgenden Einsatz zu erhalten.

In diesem Zusammenhang besonders günstig ist es, wenn die Übertragung einer Drehbewegung maschinenseitig kuppelbar ausgeführt ist. Bei einem Wechsel eines Werkzeugplatzes kann solchermaßen nach einem Wechsel eines Werkzeugplatzes die ursprüngliche Position wieder aufgegriffen werden.

Beim Getriebe kann es sich bevorzugt um ein Spannungswellengetriebe (auch Wellgetriebe oder Gleitkeilgetriebe genannt, auch als Harmonic Drive^{®} - Getriebe bekannt) handeln. Dieser Getriebe-Typ zeichnet sich durch besondere Positioniergenauigkeit und geringes Spiel aus.

Bevorzugt ist vorgesehen, dass der maschinenseitige Schaft als eine DIN 69880 / DIN ISO 10889 kompatible Werkzeugaufnahme - eine sogenannte VDI-Aufnahme - ausgebildet ist.
VDI-Werkzeughalter werden nach dem Durchmesser der Werkzeugaufnahme bezeichnet, also beispielsweise "VDI 40" für einen Zylinderdurchmesser der Werkzeugaufnahme von 40 mm.

Das Mittel zur Übertragung einer Drehbewegung kann beispielsweise aus einer Welle bestehen. Das Mittel zur Übertragung einer Drehbewegung umfasst eine Schnittstelle zur Ankopplung an einen Antrieb, die dazu ausgebildet ist, eine Drehbewegung einer angetriebenen Werkzeugaufnahme abzugreifen. Im einfachen Fall besteht die Schnittstelle in einer Verzahnung, beispielsweise einer Poylgonverzahnung, die in eine entsprechende Gegenverzahnung eines Werkzeugträgers einführbar ist. Ferner kann die Schnittstelle kuppelbar ausgebildet sein.

Es kann vorgesehen sein, dass eine Längsachse des maschinenseitigen Schafts im Wesentlichen parallel zu einer Längsachse des werkzeugseitigen Schafts und / oder des Werkzeughalters verläuft.

In einer Variante verläuft die Längsachse des maschinenseitigen Schafts im Wesentlichen koaxial zu der Längsachse des werkzeugseitigen Schafts.

Gemäß einer alternativen Anordnung besteht ein lateraler Versatz zwischen der Längsachse des maschinenseitigen Schafts und der Längsachse des werkzeugseitigen Schafts. Diese gekröpfte Anordnung ist besonders vorteilhaft für einen Einsatz des Werkzeugsystems an einem sogenannten Sternrevolver, also einem Werkzeugträger mit umfangsseitiger (radialer) Anordnung von Werkzeugaufnahmen.

Gemäß einer Variante verläuft die Längsachse des Werkzeughalters parallel und lateral versetzt zu der Längsachse des werkzeugseitigen Schafts. In anderen Worten kann vorgesehen sein, dass der Werkzeughalter nicht koaxial an dem werkzeugseitigen Schaft ausgebildet ist. Diese Anordnung bewirkt, dass bei der Drehbewegung des werkzeugseitigen Schafts der Werkzeughalter eine Schwenkbewegung entlang einer Kreisbahn um die Längsachse des werkzeugseitigen Schafts ausführt.

Es kann vorgesehen sein, dass Längsachse des werkzeugseitigen Schafts und / oder des Werkzeughalters geneigt zu der Längsachse des maschinenseitigen Schafts verläuft. Hier besteht also ein Winkelversatz zwischen Antrieb und Abtrieb. Der Winkel kann bevorzugt ein rechter Winkel sein.

Eine gewinkelte Anordnung ist besonders vorteilhaft für einen Einsatz des Werkzeugsystems an einem sogenannten Scheibenrevolver, also einem Werkzeugträger mit einer stirnseitigen (axialen) Anordnung der Werkzeugaufnahmen.

Am Werkzeughalter ist ein Plattensitz zur Aufnahme einer auswechselbaren Schneidplatte vorgesehen. Der Plattensitz ist quer zum Werkzeughalter, das heißt quer zur Längsachse des Werkzeughalters orientiert.

Bevorzugt ist der Plattensitz im Wesentlichen senkrecht zur Längsachse des Werkzeughalters orientiert. Das heißt in anderen Worten, dass die Ebenennormale des Plattensitzes im Wesentlichen parallel zur Längsachse des Werkzeughalters verläuft.

Häufig ist ein Plattensitz in der Regel nicht als eine ebene Fläche ausgeführt. Vielmehr weist ein Plattensitz üblicherweise eine Oberflächengestaltung auf, die zu einer Unterseite einer zur Aufnahme in den Plattensitz vorgesehenen Schneidplatte korrespondiert, wodurch die Schneidplatte auch formschlüssig im Plattensitz fixiert wird. Diese Oberflächengestaltung kann etwa in Form von Positionierelementen ausgebildet sein, welche beispielsweise einen lagerichtigen Einbau einer Schneidplatte am Plattensitz vorgeben können. Damit besteht an der Oberfläche eines Plattensitzes freilich eine Vielzahl von in unterschiedliche Richtungen weisenden Ebennormalen.

Der Einfachheit halber wird hier zur Beschreibung der Orientierung des Plattensitzes als Bezugsebene jene Ebene verstanden, normal zu welcher die vorwiegende Einwirkung einer Klemmkraft erfolgt. Die Klemmkraft wird in der Regel über eine Klemmschraube oder über eine Spannpratze erzeugt, durch welche Klemmkraft eine Schneidplatte in den Plattensitz gezogen wird.

Eine Orientierung des Plattensitzes "quer zum Werkzeughalter" bedeutet also, dass die Bezugsebene des Plattensitzes geneigt zur Längsachse des Werkzeughalters verläuft. Insbesondere ist der Plattensitz im Wesentlichen senkrecht zur Längsachse des Werkzeughalters ausgerichtet. "Im Wesentlichen" umfasst auch Abweichungen von etlichen Graden, beispielsweise 10°. Besonders günstig ist allerdings, wenn der Plattensitz senkrecht zur Längsachse des Werkzeughalters ausgerichtet ist.

Damit ist es, anders als bei konventionellen Anordnungen zum Drehen, beim erfindungsgemäßen Werkzeugsystem eingerichtet, dass bei einem Einsatz des Werkzeugsystems eine vorwiegende Krafteinleitung von Zerspanungskräften in Richtung der Längsachse des Werkzeughalters erfolgt. Folglich wirken nur geringe Biegemomente auf den Werkzeughalter. Diese Anordnung ist besonders steif.

Insbesondere ist genau ein Plattensitz am Werkzeughalter ausgebildet.

Bevorzugt ist der Plattensitz zur Aufnahme einer Schneidplatte für eine Drehbearbeitung ausgebildet.

In einer Weiterbildung ist an dem wenigstens einen Plattensitz eine auswechselbare Schneidplatte umfassend wenigstens eine Schneidecke mit einer als Spanfläche ausgebildeten Oberseite und einer als Anlagefläche ausgebildeten Unterseite derart angeordnet, dass die Oberseite der Schneidplatte sich im Wesentlichen senkrecht zur Längsachse des Werkzeughalters erstreckt. "Im Wesentlichen" umfasst auch Abweichungen von etlichen Graden, beispielsweise 10°. Besonders günstig ist allerdings, wenn die Oberseite der Schneidplatte senkrecht zur Längsachse des Werkzeughalters ausgerichtet ist.

Weiter bevorzugt ist die Schneidplatte als polygonale Schneidplatte ausgeführt. In diesem Fall weist die Schneidplatte durch Schneidecken begrenzte Schneidkanten auf.

Insbesondere bevorzugt ist die Schneidplatte als im Wesentlichen dreieckige Platte mit drei zur Zerspanung nutzbaren Schneidecken ausgebildet.

Die Schneidplatte ist so angeordnet, dass wenigstens eine Schneidecke und beidseitig daran anschließende Schneidkantenabschnitte über einen Außenumfang der Stirnseite des Werkzeughalters hervorsteht.

Weiter bevorzugt steht der gesamte Außenumfang der Schneidplatte über den Außenumfang des Werkzeughalters hervor. Damit ist die Schneidplatte entlang ihres gesamten Umfangs grundsätzlich nutzbar.

Die Schneidplatte kann beispielsweise mehrere gleichartig ausgebildete Schneidkanten aufweisen oder aber es können unterschiedlich ausgebildete Schneidkanten vorgesehen sein. Eine Schneidplatte mit einer Grundform eines gleichseitigen Dreiecks ist vorteilhaft im Hinblick auf eine in diesem Fall besonders einfache Indexierung der Schneidplatte, also einem Weiterdrehen der Schneidplatte zu einer nächsten Schneidecke, welches Weiterdrehen mit dem erfindungsgemäßen Werkzeugsystem erfolgen kann. Somit ist kein Lösen der Schneidplatte vom Plattensitz notwendig.

Bevorzugt ist eine Anordnung, nach der die Längsachse des werkzeugseitigen Schafts durch einen Schneideckenradiusmittelpunkt einer Schneidecke der Schneidplatte verläuft. Eine Krümmung einer Schneidecke kann durch einen Kreis beschrieben werden. Der Mittelpunkt dieses Kreises wird in diesem Zusammenhang als Schneideckenradiusmittelpunkt bezeichnet.

Gestaltet man das Werkzeugsystem so aus, dass die Längsachse des werkzeugseitigen Schafts und damit die Drehachse des werkzeugseitigen Schafts durch den Schneideckenradiusmittelpunkt verläuft, ist bei einer Änderung der Ausrichtung der Schneidplatte eine Kontur der betreffenden Schneidecke invariant bezüglich der Drehung.

In anderen Worten erklärt: steht die betreffende Schneidecke, durch deren Schneideckenradiusmittelpunkt die Drehachse des werkzeugseitigen Schafts verläuft, im Eingriff mit einem Werkstück, so bleibt bei einer Drehung der Schneidplatte um besagte Drehachse ein radialer Abstand der Schneidecke gegenüber dem Werkstück unverändert.

Das hat den besonderen Effekt und Vorteil, dass keine translatorische Kompensation der Lage der betreffenden Schneidecke bezüglich eines zu bearbeitenden Werkstücks erfolgen muss, um beispielsweise eine Spantiefe konstant zu halten. Dies erleichtert eine Maschinenprogrammierung.

Das Werkzeugsystem erlaubt beispielsweise eine Veränderung eines Anstellwinkels einer Schneidkante, indem die von der angetriebenen Werkzeugaufnahme abgreifbare Drehbewegung untersetzt auf den werkzeugseitigen Schaft übertragen wird.

Damit kann die gleiche Schneidplatte für verschiedene Zerspanungsoperationen verwendet werden, die unterschiedliche Anstellwinkel erfordern.

Weiter bevorzugt weist die Schneidplatte wenigstens zwei voneinander verschiedene Schneidkanten auf. In dieser Weiterbildung des Werkzeugsystems kann durch Übertragung der von der angetriebenen Werkzeugaufnahme auf den Werkzeughalter eine andere Schneidkante in eine Bearbeitungsposition für einen nächsten Bearbeitungsschritt gebracht werden. Das Werkzeugsystem ermöglicht es, die Schneidplatte so zu verstellen, dass für verschiedene Zerspanungsoperationen andere Schneidkanten in Position gebracht werden, indem die von der angetriebenen Werkzeugaufnahme abgreifbare Drehbewegung untersetzt auf den werkzeugseitigen Schaft übertragen wird.

Das Werkzeugsystem ist insbesondere für Drehbearbeitungen geeignet.

Schutz wird auch begehrt für ein Verfahren zur Bearbeitung eines Werkstücks. mit einem Werkzeugsystem umfassend
- einen maschinenseitigen Schaft, der in eine angetriebene Werkzeugaufnahme einbringbar ausgebildet ist, der maschinenseitige Schaft enthaltend ein Mittel zur Übertragung einer von der angetriebenen Werkzeugaufnahme abgreifbaren Drehbewegung,
- einen werkzeugseitigen Schaft, der als Werkzeughalter ausgebildet ist oder an dem ein Werkzeughalter lösbar verbunden ist,
- ein Getriebe angeordnet zwischen dem maschinenseitigen Schaft und dem werkzeugseitigen Schaft, welches Getriebe dazu ausgebildet ist, eine vom Mittel übertragene Drehbewegung untersetzt auf den werkzeugseitigen Schaft zu übertragen,
- wenigstens einen am Werkzeughalter ausgebildeten Plattensitz mit einer darin aufgenommenen auswechselbaren Schneidplatte, welcher Plattensitz an einer sich quer zu einer Längsachse des Werkzeughalters erstreckenden Stirnseite des Werkzeughalters ausgebildet ist,
wobei das Verfahren die Schritte aufweist:
- Rotieren des Werkstücks um eine Werkstückachse,
- zerspanende Bearbeitung einer Oberfläche des Werkstücks mit der Schneidplatte derart, dass die als Spanfläche ausgebildete Oberseite der Schneidplatte im Wesentlichen senkrecht zur Längsachse des Werkzeughalters steht,
- Verändern einer Ausrichtung der Schneidplatte, indem eine Drehbewegung vom Mittel zur Übertragung der Drehbewegung über das Getriebe untersetzt auf den die Schneidplatte tragenden Werkzeughalter übertragen wird.

Beim Verfahren zur Bearbeitung eines Werkstücks handelt es sich insbesondere um eine Drehbearbeitung.

Nach dem erfindungsgemäßen Verfahren wird eine Ausrichtung einer Schneidplatte über eine von einer angetriebenen Werkzeugaufnahme abgreifbaren Drehbewegung verändert.

Die eigentliche Zerspanung erfolgt durch eine Relativbewegung des rotierenden Werkstücks zur Schneidplatte.

Die von der angetriebenen Werkzeugaufnahme abgreifbare Drehbewegung wird nicht für eine eigentliche Zerspanungsleistung genutzt, wie es beispielsweise bei von einer angetriebenen Werkzeugaufnahme angetriebenen Werkzeugen, etwa Bohrern oder Fräsern, bekannt ist.

Gemäß der Erfindung hingegen wird die von der angetriebenen Werkzeugaufnahme abgreifbare Drehbewegung zum Verändern der Ausrichtung der Schneidplatte genutzt.

Dazu wird ein Antrieb der angetriebenen Werkzeugaufnahme solange aktiviert, bis die gewünschte Veränderung der Ausrichtung der Schneidplatte erfolgt ist. Alternativ oder zusätzlich kann bei einer kuppelbaren Ausführung des Mittels zur Übertragung der Drehbewegung die Dauer der Übertragung der Drehbewegung durch eine Ein- und Auskupplung des Mittels zur Übertragung der Drehbewegung bestimmt werden.

Durch Verändern der Ausrichtung der Schneidplatte wird eine Spanbildung an der Schneidplatte verändert.

Eine Ausrichtung einer Schneidplatte umfasst die Lage der Schneidplatte hinsichtlich des Anstellwinkels einer Schneidkante in Bezug auf die zu bearbeitende Werkstückoberfläche.

Eine Ausrichtung einer Schneidplatte kann auch oder zusätzlich durch eine Auswahl einer Schneidkante gekennzeichnet sein, welche Schneidkante für einen bestimmten Bearbeitungsschritt vorgesehen ist.

Insbesondere kann vorgesehen sein, dass die Veränderung der Ausrichtung der Schneidplatte erfolgt, während sich die Schneidplatte außerhalb eines Eingriffs mit dem Werkstück befindet. Gemäß dieser Verfahrensvariante wird also das Werkzeug in eine Position bewegt, in der sich die Schneidplatte nicht im Eingriff mit dem Werkstück ("im Schnitt") befindet, und in dieser Position erfolgt eine Veränderung einer Ausrichtung der Schneidplatte. Nach Veränderung der Ausrichtung der Schneidplatte kann das Werkzeug wieder in eine Arbeitsposition gebracht werden. Die Veränderung der Ausrichtung der Schneidplatte kann darin bestehen, dass ein Anstellwinkel der für den nachfolgenden Bearbeitungsschritt vorgesehenen Schneidkante verstellt wird. Alternativ kann die Veränderung der Ausrichtung der Schneidplatte darin bestehen, eine andere Schneidkante für den nachfolgenden Bearbeitungsschritt in Position zu bringen.

Alternativ kann die Verstellung auch im Schnitt, also in Arbeitsposition erfolgen. Gemäß dieser Variante ist es insbesondere vorgesehen, den Anstellwinkel einer sich im Eingriff befindlichen Schneidkante zu verändern.

Arbeitsposition bedeutet im Zusammenhang dieser Offenbarung, dass sich die Schneidplatte im Eingriff mit dem zu zerspanenden Werkstück befindet. Außerhalb einer Arbeitsposition bedeutet, dass sich die Schneidplatte nicht im Eingriff ("im Schnitt") befindet.

Die an dem Werkzeughalter durchzuführende Winkeländerungen zur Veränderung der Ausrichtung der Schneidplatte sind in der Regel betragsmäßig gering. Besteht die Veränderung der Ausrichtung der Schneidplatte darin, dass ein Anstellwinkel der für den nachfolgenden Bearbeitungsschritt vorgesehenen Schneidkante verändert wird, so liegen die Winkelbeträge typischerweise im Bereich weniger Winkelgrade, insbesondere bei einer Veränderung des Anstellwinkels im Schnitt.

Besteht die Veränderung der Ausrichtung der Schneidplatte darin, eine andere Schneidkante für den nachfolgenden Bearbeitungsschritt in Position zu bringen, so wird am Beispiel einer Dreiecksplatte diese typischerweise um 120° gedreht, um auf eine benachbarte Schneidkante zu wechseln.

Gemäß einer Weiterbildung des Verfahrens kann vorgesehen sein, dass mit der Veränderung des Anstellwinkels eine koordinierte Translationsbewegung des Werkzeugs erfolgt.

Damit ist gemeint, dass zusätzlich zu der Veränderung des Anstellwinkels durch Drehung der Schneidplatte eine mit dieser Drehung abgestimmte Translationsbewegung in einer Ebene parallel zu einer Werkzeugebene erfolgt, derart, dass eine Position der im Eingriff stehenden Schneidecke relativ zum Werkstück beibehalten wird. Mit Beibehalten der Position kann beispielsweise gemeint sein, dass bei einer Veränderung des Anstellwinkels eine Spantiefe konstant gehalten wird.

Ferner kann die mit der Veränderung des Anstellwinkels koordinierte Translationsbewegung so abgestimmt sein, dass ein Vorschub an der im Eingriff stehenden Schneidecke konstant gehalten wird. In diesem Fall wird also eine bereits vorgesehene Vorschubgeschwindigkeit des Werkzeugs parallel zur Werkstücklängsachse in der koordinierten Translationsbewegung berücksichtigt, derart dass eine Vorschubgeschwindigkeit bezüglich der Werkstückoberfläche konstant bleibt.

Dies ist insbesondere für eine Wahrung einer gleichmäßigen Werkstückoberfläche relevant: da bei einer Drehbearbeitung eine Schneidecke eine spiralförmige Bahn an der Oberfläche des Werkstücks zieht, würde eine mit der Vorschubgeschwindigkeit überlagerte Translationsbewegung der Schneidplatte ohne eine solche Kompensation zu einem veränderten Oberflächenprofil durch einen veränderten Abstand von Drehriefen führen.

Bei der weiter oben diskutierten Ausgestaltung des Werkzeugsystems, bei der die Längsachse des werkzeugseitigen Schafts durch einen Schneideckenradiusmittelpunkt einer aktiven Schneidecke der Schneidplatte verläuft, ist eine mit der Veränderung des Anstellwinkels koordinierte Translationsbewegung zur Kompensation der Lage der Schneidecke bezüglich des Werkstücks vorteilhafterweise nicht erforderlich.

Ferner wird Schutz begehrt für eine Verwendung eines Werkzeugsystems nach einem der Ansprüche 1 bis 7, um bei einer Bearbeitung eines Werkstücks eine Ausrichtung einer Schneidkante einer Schneidplatte zu verändern.

Weitere Vorteile und Zweckmäßigkeiten der Erfindung ergeben sich anhand der nachfolgenden Beschreibung von Ausführungsbeispielen unter Bezugnahme auf die beigefügten Figuren. Dabei zeigt bzw. zeigen:
- Fig. 1: eine Ausführungsform eines erfindungsgemäßen Werkzeugsystems in einer perspektivischen Ansicht
- Fig. 2: die Ausführungsform in einer Seitenansicht
- Fig. 3: die Ausführungsform in einer Frontalansicht
- Fig. 4a, 4b: Details aus Figur 3
- Fig. 5: eine Anordnung mit verändertem Anstellwinkel
- Fig. 6: eine weitere Ausführungsform des Werkzeugsystems
- Fig. 7a, 7b: Details zu Figur 6
- Fig. 8- 10: ein Beispiel einer Schneidplatte
- Fig. 11: eine Anordnung von Schneidplatte und Werkzeughalter
- Fig. 12: eine weitere Ausführungsform des Werkzeugsystems
- Fig. 13: eine weitere Ausführungsform des Werkzeugsystems
- Fig. 14: einen Zusammenbau von Werkzeugsystem und Werkzeugträger
- Fig. 15a, 15b: das Werkzeugsystem mit einer Schneidplatte gemäß einer weiteren Alternative
- Fig. 16a bis 16d: die Schneidplatte 7 von Figuren 15a und 15b im Detail.

Anhand der Figuren wird das Werkzeugsystem 1 beschrieben und das Verfahren zur Bearbeitung eines Werkstücks W diskutiert. Auf eine wiederholte Eintragung von Bezugszeichen für gleiche Elemente in den Figuren wird der Übersichtlichkeit halber teilweise verzichtet.

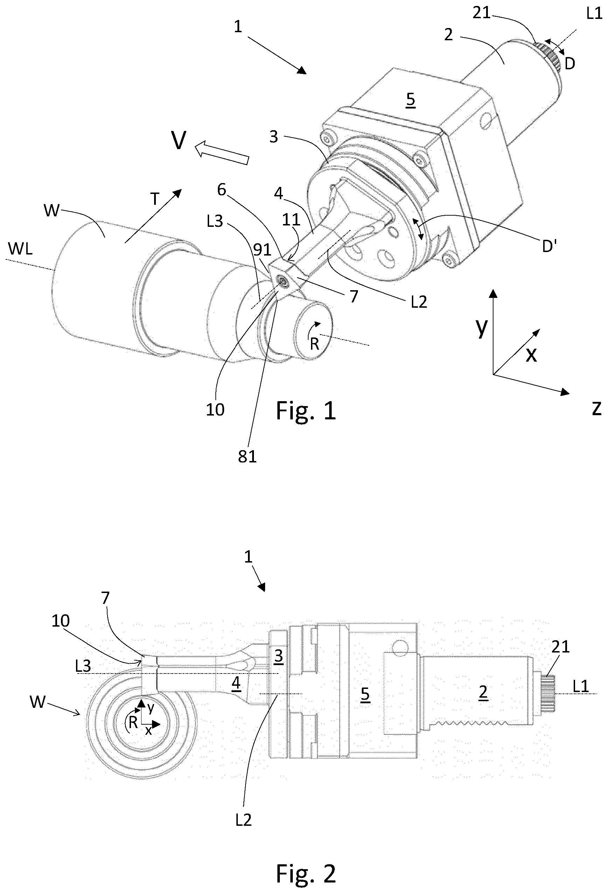

Figur 1 zeigt eine Ausführungsform eines erfindungsgemäßen Werkzeugsystems 1 in einer perspektivischen Ansicht.

Das dargestellte Werkzeugsystem 1 umfasst einen maschinenseitigen Schaft 2 mit einer Längsachse L1, der in einen angetriebenen Werkzeugträger (nicht dargestellt) einbringbar ausgebildet ist. Der Werkzeugträger kann beispielsweise als Werkzeugrevolver ausgebildet sein. Der maschinenseitige Schaft 2 bildet eine Schnittstelle zu dem Werkzeugträger. Insbesondere kann der maschinenseitige Schaft 2 als VDI-Zylinderschaft nach DIN 69880 ausgebildet sein.

Der maschinenseitige Schaft 2 enthält Mittel 21 zur Übertragung einer Drehbewegung D, welche Drehbewegung D aus dem angetriebenen Werkzeugträger abgreifbar ist. Das Mittel 21 zur Übertragung einer Drehbewegung D kann beispielsweise, und wie in diesem Ausführungsbeispiel dargestellt, aus einer Welle bestehen, welche an ihrem maschinenseitigen Ende eine Schnittstelle zur Ankopplung an einen Antrieb des angetriebenen Werkzeugträgers aufweist.

Die Schnittstelle umfasst typischerweise eine Verzahnung, im vorliegenden Beispiel eine Poylgonverzahnung, die in eine entsprechende Gegenverzahnung am Werkzeugträger einführbar ist. In einer Montagesituation an einem Werkzeugträger ist der maschinenseitige Schaft 2 drehfest mit dem Werkzeugträger verbunden. Die Übertragung der Drehbewegung D eines angetriebenen Werkzeugträgers erfolgt über das Mittel 21 zur Übertragung einer Drehbewegung.

Das Werkzeugsystem 1 umfasst weiters einen werkzeugseitigen Schaft 3, der mit dem Getriebe 5 drehbar verbunden ist. Das Getriebe 5 ist so ausgeführt, dass es eine über das Mittel 21 vom Werkzeugträger abgreifbare Drehbewegung D untersetzt auf den werkzeugseitigen Schaft 3 überträgt.

Das Getriebe 5 ist dazu ausgelegt, die vom maschinenseitigen Schaft 2, genauer gesagt über das Mittel 21, übertragene Drehbewegung D bevorzugt mit einer Untersetzung zwischen 50:1 bis 1000:1, weiter bevorzugt zwischen 75:1 und 125:1, insbesondere bevorzugt etwa 100:1, auf den werkzeugseitigen Schaft 3 zu übertragen. Entsprechend der Untersetzung des Getriebes 5 bewirkt die antriebsseitige Drehbewegung D eine abtriebsseitige Drehbewegung D' am werkzeugseitigen Schaft 3. Somit ist durch das Werkzeugsystem 1 die Möglichkeit geschaffen, eine von einem Werkzeugträger abgreifbare Drehbewegung D für eine rotatorische Verstellung des werkzeugseitigen Schafts 3 und eines damit verbundenen Werkzeughalters 4 zu nutzen.

Am werkzeugseitigen Schaft 3 ist bei dem gezeigten Werkzeugsystem 1 ein Werkzeughalter 4 montiert. Alternativ könnte der werkzeugseitige Schaft 3 direkt als Werkzeughalter 4 ausgebildet sein. In anderen Worten kann der Werkzeughalter 4 einstückig mit dem werkzeugseitigen Schaft 3 ausgebildet sein oder demontierbar gestaltet sein.

Der Werkzeughalter 4 ist im vorliegenden Ausführungsbeispiel exzentrisch am werkzeugseitigen Schaft 3 angeordnet. In anderen Worten fallen eine Längsachse L2 des werkzeugseitigen Schafts 3 und eine Längsachse L3 des Werkzeughalters 4 nicht zusammen, die Längsachsen L2 und L3 sind aber bevorzugt parallel.

In der hier gezeigten Ausführungsform bewirkt eine Drehbewegung D des werkzeugseitigen Schafts 3, genauer gesagt des darin befindlichen Mittels 21, eine Schwenkbewegung des Werkzeughalters 4 entlang einer Kreisbahn um die Längsachse L2 des werkzeugseitigen Schafts 3.

Bei einer alternativen, koaxialen Anordnung von werkzeugseitigem Schaft 3 und Werkzeughalter 4 bewirkt die Drehbewegung D eine Rotation des Werkzeughalters 4 um seine Längsachse L3.

Eine Drehbewegung D, welche über das Mittel 21 von einem angetriebenen Werkzeugträger abgreifbar und über das Getriebe 5 auf den werkzeugseitigen Schaft 3 übertragbar ist, wird derart nutzbar für eine Verstellung des Werkzeughalters 4 und folglich des daran ausgebildeten Plattensitzes 6.

Auf diese Weise erlaubt das Werkzeugsystem 1 die Nutzung eines Antriebs einer angetriebenen Werkzeugaufnahme für eine Verstellung, insbesondere einer Feinverstellung des Plattensitzes 6 bzw. einer am Plattensitz 6 befestigbaren Schneidplatte 7.

Die Längsachse L1 des maschinenseitigen Schafts 2, welche Längsachse L1 mit einer Längsachse des Mittels 21 zur Übertragung einer Drehbewegung zusammenfällt, ist im Ausführungsbeispiel parallel zur Längsachse L2 des werkzeugseitigen Schafts 3.

Im vorliegenden Ausführungsbeispiel sind die Längsachsen L1 und L2 parallel angeordnet.

Auch ist eine gewinkelte Anordnung vom maschinenseitigen Schaft 2 zum werkzeugseitigen Schaft 3 vorstellbar.

An einer dem Getriebe 5 abgewandten und sich quer zur Längsachse L3 des Werkzeughalters 4 erstreckenden Stirnseite des Werkzeughalters 4 ist ein Plattensitz 6 zur Aufnahme einer auswechselbaren Schneidplatte 7 ausgebildet. In der gezeigten Anordnung ist am Plattensitz 6 eine Schneidplatte 7 drehfest montiert. Die Schneidplatte 7 ist mittels einer Schraube am Plattensitz 6 angezogen und gesichert.

Bevorzugt ist der Plattensitz 6 im Wesentlichen rechtwinkelig zur Längsachse L3 des Werkzeughalters 4 angeordnet.

In der hier gezeigten Anordnung ist am Plattensitz 6 eine auswechselbare Schneidplatte 7 mit einer als Spanfläche ausgebildeten Oberseite 10 und einer als Anlagefläche ausgebildeten Unterseite 11 derart angeordnet, dass die Oberseite 10 der Schneidplatte 7 sich im Wesentlichen senkrecht zur Längsachse L3 des Werkzeughalters 4 erstreckt. Die Angabe "in Wesentlichen" umfasst Winkelabweichungen von etlichen Graden, beispielsweise 10°. Bevorzugt ist eine rechtwinkelige Anordnung der Oberseite 10 zur Längsachse L3 des Werkzeughalters 4, also eine Anordnung von 90°. In anderen Worten verläuft eine Ebenennormale der Oberseite 10 bevorzugt parallel zur Längsachse L3 des Werkzeughalters 4.

Bei einer Ausgestaltung der Schneidplatte 7 mit im Wesentlichen planparalleler Anordnung von Oberseite 10 und Unterseite 11 bedeutet die bevorzugt rechtwinkelige Anordnung der Oberseite 10 zur Längsachse L3 des Werkzeughalters 4, dass der Plattensitz 6 ebenfalls rechtwinkelig zur Längsachse L3 des Werkzeughalters 4 verläuft.

Für den Fall, dass eine Schneidplatte eingesetzt werden soll, deren Oberseite 10 und Unterseite 11 nicht planparallel verlaufen, ist der Plattensitz 6 zur Erfüllung der bevorzugten rechtwinkeligen Anordnung von Oberseite 10 zur Längsachse L3 des Werkzeughalters 4 entsprechend anzupassen.

Bezüglich des Verfahrens zur Bearbeitung eines Werkstücks W zeigt Figur 1 das Werkzeugsystem 1 in einer Bearbeitungssituation mit einem Werkstück W. Gezeigt ist eine Drehbearbeitung. Das Werkstück W rotiert mit einer Rotationsrichtung R um eine Werkstücklängsachse WL.

Bevorzugt ist die Schneidplatte 7 derart ausgerichtet, dass ihre als Spanfläche ausgebildete Oberseite 10 normal zur Längsachse L3 des Werkzeughalters 4 verläuft.

Das Werkzeugsystem 1 wird gegenüber dem Werkstücks W so zugestellt, dass eine Schneidkante 9 der Schneidplatte 7 zumindest abschnittsweise mit dem Werkstück W im Eingriff steht und Späne an der als Spanfläche ausgebildete Oberseite 10 der Schneidplatte 7 ablaufen können.

Die Anordnung bewirkt, dass auftretende Bearbeitungskräfte im Wesentlichen axial in Richtung der Längsachse L3 des Werkzeughalters 4 auf den Werkzeughalter 4 wirken, während bei konventionellen Anordnungen beim Drehen die Bearbeitungskräfte ein Biegemoment auf einen den Schneideinsatz tragenden Werkzeugkörper ausüben.

Unter Heranziehung des zur Figur 1 dargestellten Koordinatensystems lassen sich die bevorzugten räumlichen Verhältnisse wie folgt beschreiben:
die Werkstücklängsachse WL verläuft parallel zur z-Achse, die Oberseite 10 der Schneidplatte 7 liegt in einer Ebene parallel zur yz-Ebene, die Längsachse L3 des Werkzeughalters 4 ist parallel zur x-Achse. Ein Vorschub erfolgt in einer Vorschubrichtung V parallel zur z-Achse, hier in negativer z-Richtung.

In der gezeigten Bearbeitungssituation befinden sich eine Schneidkante 91 und eine aktive Schneidecke 81 im Eingriff mit dem Werkstück W in einem Längsdrehen unter Erzeugung einer Schulter am Werkstück W.

Figur 2 zeigt die Anordnung nach Figur 1 in einer Seitenansicht.

Die Längsachse L3 des Werkzeughalters 4 ist in diesem Ausführungsbeispiel so ausgerichtet, dass sie in einer Ebene xy liegt, die senkrecht zur Werkstücklängsachse WL verläuft. Konkret verläuft die Längsachse L3 des Werkzeughalters 4 parallel zur x-Achse und normal zur Werkstücklängsachse WL.

Bevorzugt ist vorgesehen, dass die als Spanfläche ausgebildete Oberseite 10 der Schneidplatte 7 in einer Ebene liegt, welche die Werkstücklängsachse WL enthält.

Bevorzugt ist die Schneidplatte 7 derart ausgerichtet, dass ihre als Spanfläche ausgebildete Oberseite 10 normal zur Längsachse L3 des Werkzeughalters 4 verläuft. Die Oberseite 10 liegt weiter bevorzugt in einer Ebene yz, welche die Werkstücklängsachse WL enthält.

Bevorzugt ist die Längsachse L3 des Werkzeughalters 4 in einer Ebene xy senkrecht zur Werkstücklängsachse WL ausgerichtet.

Besonders bevorzugt verläuft die Längsachse L3 des Werkzeughalters 4 parallel zur x-Achse, und die Werkstücklängsachse WL verläuft parallel zur z-Achse.

Anhand Figur 2 sollen Aspekte des erfindungsgemäßen Verfahrens zur Bearbeitung eines Werkstücks näher diskutiert werden.

Das Verfahren zur Bearbeitung eines Werkstücks umfasst zunächst die Schritte:
- Rotieren des Werkstücks W um eine Werkstückachse WL,
- zerspanende Bearbeitung einer Oberfläche des Werkstücks W mit der Schneidplatte 7 derart, dass die Oberseite 10 der Schneidplatte 7 im Wesentlichen senkrecht zur Längsachse L3 des Werkzeughalters 4 steht.

Bevorzugt liegt die Oberseite 10 der Schneidplatte 7 in einer Ebene, welche die Werkstücklängsachse WL enthält. Dies bildet den bevorzugten Fall ab, in welchem die als Spanfläche ausgebildete Oberseite 10 der Schneidplatte 7 so zum Werkstück W orientiert ist, dass eine Tangentialrichtung der Rotationsbewegung R des Werkstücks W in der Ebene des Eingriffs normal auf die Oberseite 10 steht.

Bezüglich des erfindungsgemäßen Verfahrens ist weiters vorgesehen, eine Ausrichtung der Schneidplatte 7 zu verändern, indem eine Drehbewegung D von der Seite des maschinenseitigen Schafts 2 untersetzt auf den die Schneidplatte 7 tragenden Werkzeughalter 4 übertragen wird. Dazu wird - wie bereits oben für das Werkzeugsystem 1 beschrieben - eine von einem angetriebenen Werkzeugträger abgreifbare Drehbewegung über das Mittel 21 zur Übertragung einer Drehbewegung auf den Werkzeughalter 4 übertragen.

Diese Veränderung der Ausrichtung der Schneidplatte 7 kann entweder erfolgen, während sich die Schneidplatte 7 außerhalb eines Eingriffs mit dem Werkstück W befindet oder im Schnitt, also in einer Arbeitsposition erfolgen. Gemäß der letzteren Variante ist es insbesondere vorgesehen, den Anstellwinkel einer sich im Eingriff befindlichen Schneidkante der Schneidplatte 7 zu verändern. Dazu wird ein Antrieb des angetriebenen Werkzeugträgers solange aktiviert, bis die gewünschte Veränderung der Ausrichtung der Schneidplatte 7 vollzogen ist.

Eine Veränderung der Ausrichtung der Schneidplatte 7 außerhalb eines Eingriffs mit dem Werkstück W erfolgt derart, dass das Werkzeugsystem 1 zunächst in eine Position außerhalb einer Arbeitsposition verfahren wird. Dazu wird das Werkzeugsystem 1 bevorzugt in der xy-Ebene oder einer Ebene parallel dazu bewegt, bis sich die Schneidplatte 7 in einer Position befindet, in der keine Kollision mit dem Werkstück W auftreten kann.

In dieser sicheren Position wird nun ein Antrieb des angetriebenen Werkzeugträgers solange aktiviert, bis die gewünschte Veränderung der Ausrichtung der Schneidplatte 7 vollzogen ist.

Die Veränderung der Ausrichtung der Schneidplatte 7 kann darin bestehen, dass ein Anstellwinkel einer für den nachfolgenden Bearbeitungsschritt vorgesehenen Schneidkante 9 verstellt wird. Alternativ kann die Veränderung der Ausrichtung der Schneidplatte 7 darin bestehen, eine andere Schneidkante 9 für den nachfolgenden Bearbeitungsschritt in Position zu bringen.

Nach der Veränderung der Ausrichtung der Schneidplatte 7 wird das Werkzeugsystem 1 wieder in eine Arbeitsposition verfahren, also die Schneidplatte 7 wieder in Eingriff mit dem Werkstück W gebracht.

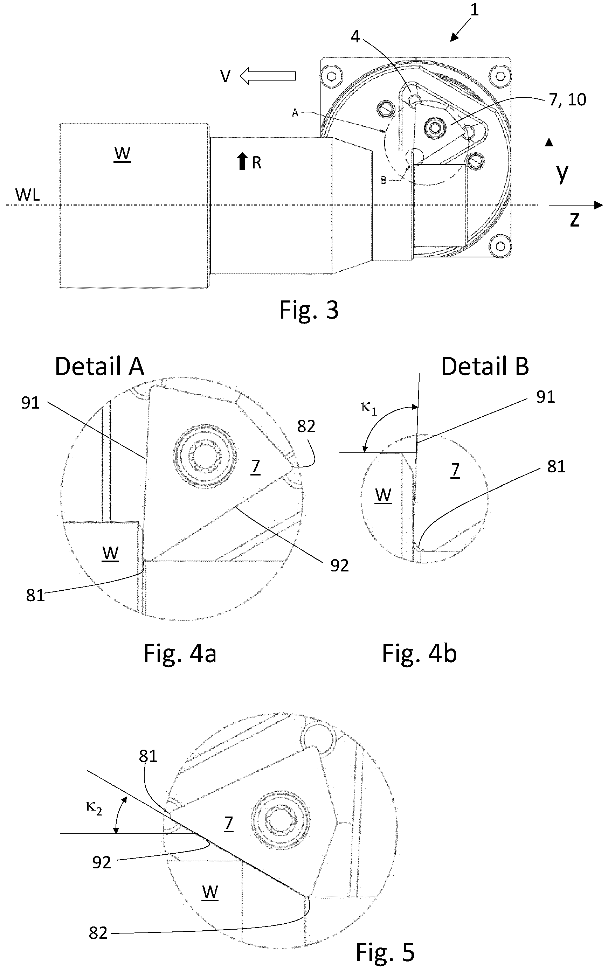

Figur 3 zeigt das Werkzeugsystem 1 der vorangegangenen Zeichnungen in einer Vorderansicht entlang der x-Achse, normal auf die Stirnseite des Werkzeughalters 4 und die Oberseite 10 der Schneidplatte 7, welche normal zur Längsachse L3 des Werkzeughalters 4 ausgerichtet ist.

Figur 4a zeigt vergrößert das Detail A aus Figur 3, Figur 4b zeigt vergrößert das Detail B aus Figur 3.

Die Schneidplatte 7 befindet sich mit der aktiven Schneidkante 91 und der aktiven Schneidecke 81 im Eingriff mit dem Werkstück W. Die Schneidkante 91 ist unter dem Anstellwinkel κ₁ zur Werkstücklängsachse WL ausgerichtet.

Wie aus Figur 4b hervorgeht, ist der Anstellwinkel κ₁ in der gezeigten Ausrichtung der Schneidplatte 7 mit über 90° so gewählt, um eine Schulter am Werkstück W zu erzeugen. Bei der gezeigten Drehbearbeitung kann das Werkzeugsystem 1 entlang einer Vorschubrichtung V parallel zur Werkstücklängsachse WL bewegt werden. Hier ist ein Längsdrehen unter Erzeugung einer Schulter am Werkstück W gezeigt. In einer Variante kann der Vorschub in umgekehrter Richtung erfolgen.

Das erfindungsgemäße Werkzeugsystem 1 erlaubt eine Veränderung der Ausrichtung der Schneidplatte 7, indem eine von einem angetriebenen Werkzeugträger abgreifbare Drehbewegung auf den Werkzeughalter 4 übertragen wird.

Es kann beispielsweise für ein Längsdrehen der Anstellwinkel κ verringert werden. Wie bereits ausgeführt, kann die Veränderung der Ausrichtung der Schneidplatte 7 im Schnitt oder in einer Position außerhalb einer Arbeitsposition erfolgen.

So zeigt Figur 5 eine Darstellung des Werkzeugsystems 1 in gleicher Ansicht wie in Figur 4a mit einer gegenüber Figuren 3 und 4 veränderten Ausrichtung der Schneidplatte 7. Die Schneidplatte 7 wurde gegenüber der zuvor gezeigten Ausrichtung um rund 60° im Uhrzeigersinn gedreht. Als aktive Schneidecke wirkt nun die Schneidecke 82, als aktive Schneidkante wirkt die Schneidkante 92.

Der Anstellwinkel κ₂ der Schneidkante 92 in der gezeigten Ausrichtung der Schneidplatte 7 ist hier kleiner als in Figuren 3 und 4 gewählt, wie es etwa für ein Längsdrehen mit hohen Vorschubgeschwindigkeiten und geringen Spantiefen typisch ist.

Die hier gezeigte Veränderung der Ausrichtung der Schneidkante 91 ist mit dem erfindungsgemäßen Werkzeugsystem 1 bewirkbar, indem eine Drehbewegung vom Mittel 21 zur Übertragung der Drehbewegung über das Getriebe 5 untersetzt auf den die Schneidplatte 7 tragenden Werkzeughalter 4 übertragen wird.

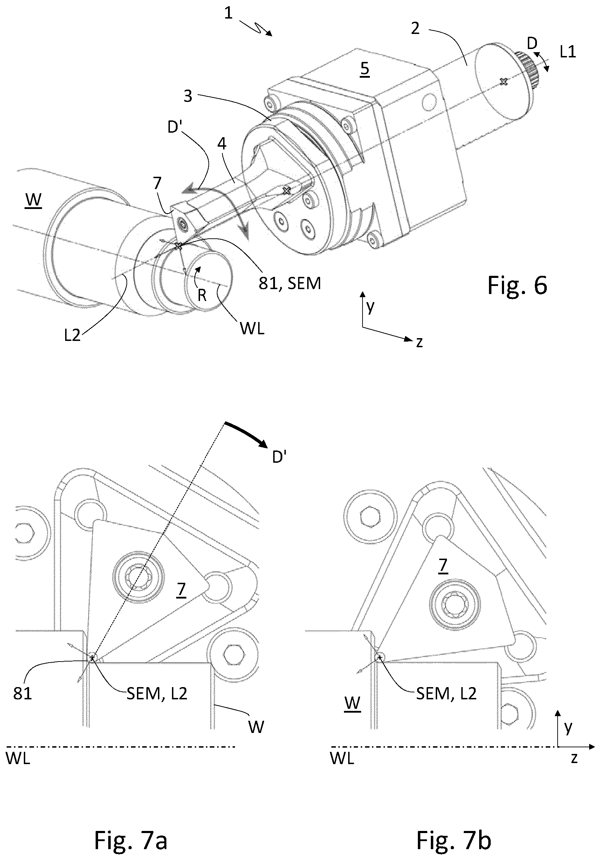

Figur 6 zeigt ein Werkzeugsystem 1 in einer weiteren Ausführungsform.

In dieser Ausführungsform ist es eingerichtet, dass die Längsachse L2 des werkzeugseitigen Schafts 3 durch einen Schneideckenradiusmittelpunkt SEM der aktiven Schneidecke 81 der Schneidplatte 7 verläuft. Wie bereits weiter oben erläutert, hat diese Ausgestaltung den besonderen Vorteil, dass bei einer Drehung des werkzeugseitigen Schafts 3 die Schneidecke 81 bezüglich ihrer Zustellung gegenüber dem Werkstück W unveränderlich ist. Es braucht also keine Kompensation der Lage der Schneidecke 81 durch eine mit der Drehung der Schneidplatte 7 koordinierte Translationsbewegung des Werkzeugsystems 1 in oder parallel zur yz-Ebene zu erfolgen.

Ferner fällt in diesem Ausführungsbeispiel Längsachse L2 des werkzeugseitigen Schafts 3 mit der Längsachse L1 des maschinenseitigen Schafts 2 zusammen. Für den Effekt der Rotationsinvarianz der Schneidecke 81 gegenüber einer Drehung um die Längsachse L2 des werkzeugseitigen Schafts 3, welche Längsachse L2 durch den Schneideckenradiusmittelpunkt SEM der Schneidecke 81 verläuft, ist es freilich nicht erforderlich, dass Längsachse L1 des maschinenseitigen Schafts 2 mit der Längsachse L2 des werkzeugseitigen Schafts 3 zusammenfällt.

Figuren 7a und 7b zeigen eine Stirnansicht auf die Schneidplatte 7 für eine Konfiguration nach Figur 6 mit zwei verschiedenen Ausrichtungen der Schneidplatte 7 hinsichtlich eines Anstellwinkels gegenüber dem Werkstück W. Die Schneidecke 81 der Schneidplatte 7 befindet sich im Eingriff mit dem Werkstück W. Die Längsachse L2 des werkzeugseitigen Schafts 3 und damit dessen Drehachse verläuft durch den Schneideckenradiusmittelpunkt SEM der aktiven Schneidecke 81. In anderen Worten liegt der Mittelpunkt einer Drehbewegung des werkzeugseitigen Schafts 3 im Schneideckenradiusmittelpunkt SEM.

Wird nun der werkzeugseitige Schafts 3 durch Übertragung der Drehbewegung D rotiert (wie in Figur 7a durch einen Pfeil illustriert), so vollzieht die Schneidplatte 7 eine Abwälzbewegung entlang der Schneidecke 81, wodurch eine radiale Position (das heißt eine Position in y-Richtung) der Schneidecke 81 gegenüber der Werkstücklängsachse WL unverändert bleibt.

Diese Verhältnisse werden aus der Zusammenschau der Figuren 7a und 7b deutlich. Gegenüber der Ausrichtung der Schneidplatte 7 in Figur 7a ist die Schneidplatte 7 in Figur um rund 24° im Uhrzeigersinn verdreht. Die Position der Schneidecke 81 gegenüber der Werkstücklängsachse WL bleibt von der Rotation unberührt.

Durch die bevorzugte Ausgestaltung des Werkzeugsystems 1, bei der die Längsachse L2 des werkzeugseitigen Schafts 3 durch den Schneideckenradiusmittelpunkt SEM der aktiven Schneidecke 81 der Schneidplatte 7 verläuft, sind Veränderungen der Ausrichtung der Schneidplatte 7 während einer spanenden Bearbeitung, das heißt im Schnitt, besonders vorteilhaft ermöglicht.

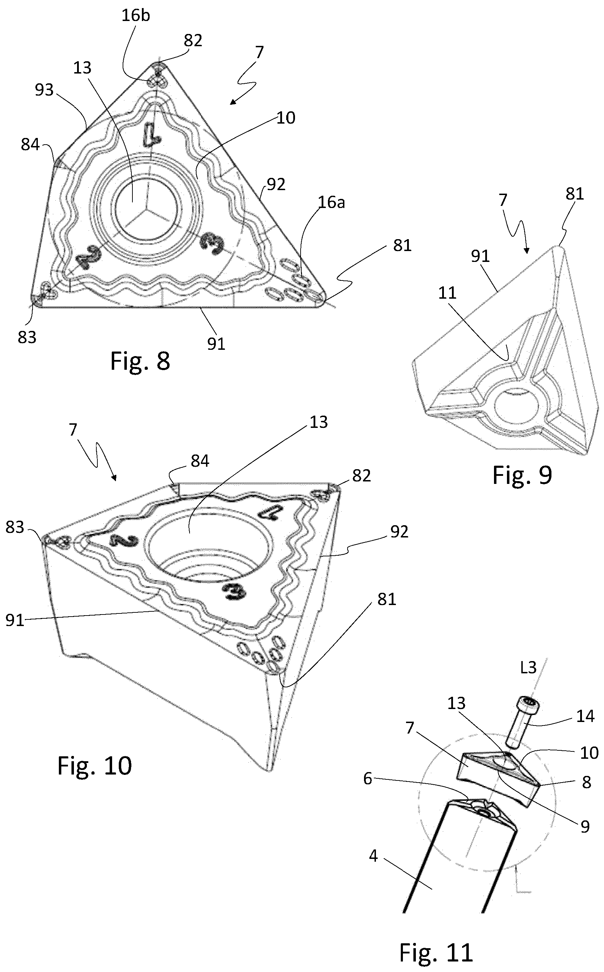

Figuren 8 bis 10 zeigen verschiedene Darstellungen einer beispielhaften Schneidplatte 7, welche für eine Verwendung mit dem erfindungsgemäßen Werkzeugsystem 1 und für das erfindungsgemäße Verfahren zur Bearbeitung besonders geeignet ist. Die Schneidplatte 7 weist eine Grundform eines gleichschenkeligen Dreiecks mit einer zusätzlichen Ecke auf. Die Schneidplatte 7 ist für eine einseitige Verwendung ausgebildet.

Figur 8 zeigt eine Draufsicht auf die Schneidplatte 7. Die Oberseite 10 der Schneidplatte 7 ist als Spanfläche ausgestaltet; es sind Spanleitstufen 16a, 16b ausgebildet. Die Schneidplatte 7 weist drei als Schneidecken nutzbare Ecken auf: Schneidecken 81, 82, 83. Ferner ist eine weitere Ecke 84 ausgebildet.

Zwischen den Schneidecken 81, 82, 83 erstrecken sich Schneidkanten 91, 92. Die Schneidecken 82, 83 unterscheiden sich in diesem Beispiel von der Schneidecke 81 unter anderem durch ihren Spitzenwinkel, das heißt den Winkel, den die an die Schneidecke angrenzenden Schneidkanten miteinander einschließen. Die weitere Ecke 84 bewirkt, dass der Spitzenwinkel der Schneidecken 81, 82 vergrößert ist gegenüber einem linearen Verlauf einer Schneidkante 93 zwischen den Schneidecken 81, 82.

Ferner sind in diesem konkreten Beispiel unterschiedliche Spanleitstufen 16b an den Schneidecken 82, 83 als Spanleitstufen 16a an der Schneidecke 81 ausgebildet. Zudem unterscheiden sich die Schneidecken 82, 83 von der Schneidecke 81 in ihrem Eckenradius.

Die Schneidplatte 7 weist ein Durchgangsloch 13 zur Aufnahme einer Klemmschraube zur Befestigung im Plattensitz auf.

Figur 9 zeigt die Schneidplatte 7 in einer Ansicht auf die Unterseite 11. Die Unterseite 11 ist als Anlagefläche für eine verdrehsichere Aufnahme in einen Plattensitz ausgestaltet. Die Oberseite 10 und die Unterseite 11 sind parallel zueinander.

Figur 10 zeigt die Schneidplatte 7 dieses Beispiels in einer perspektivischen Ansicht.

Mit einer Schneidplatte 7 gemäß diesem Beispiel können verschiedene Bearbeitungsoperationen einer Drehbearbeitung vorteilhaft durchgeführt werden. Insbesondere vorteilhaft ist die hier diskutierte Schneidplatte 7, wenn Bearbeitungsoperationen verschiedene Ausprägungen von Schneidecken erfordern.

Beispielsweise ist es vorteilhaft, für eine Schlichtbearbeitung eine Schneidecke mit einem anderen, vorzugsweise kleineren Spitzenwinkel einzusetzen als für eine gröbere Bearbeitung. Insbesondere ist bei der für eine Schlichtbearbeitung vorgesehenen Schneidecke eine besondere Spanleitstufe sowie ein anderer, insbesondere kleinerer Eckenradius vorgesehen. Bei der in Figuren 8-10 gezeigten Schneidplatte 7 ist die Schneidecke 81 besonders für eine Schlichtbearbeitung geeignet. Die Schneidecke 81 weist einen kleineren Spitzenwinkel als die Schneidecken 82, 83 auf. Zusätzlich weist die Schneidecke 81 auch einen kleineren Eckenradius als die Schneidecken 82, 83 auf, ist also spitzer. Ferner ist eine der Schneidecke 81 zugeordnete Spanleitstufe 16a besonders für eine Schlichtbearbeitung ausgebildet: sie ist enger geformt als beispielsweise die den Schneidecken 82, 83 zugeordneten Spanleitstufen 16b. Damit wird auch bei geringen Spantiefen einer Schlichtbearbeitung eine ausreichende Spanumformung erzielt.

Figur 11 zeigt ein Detail des Werkzeugsystems 1. Dargestellt ist der Werkzeughalter 4 des Werkzeugsystems 1 mit einem am Werkzeughalter 4 ausgebildeten Plattensitz 6 zur Aufnahme einer auswechselbaren Schneidplatte 7, welcher Plattensitz 6 an einer sich quer zu einer

Längsachse L3 des Werkzeughalters 4 erstreckenden Stirnseite des Werkzeughalters 4 ausgebildet ist.

Die Schneidplatte 7 wird mittels einer Klemmschraube 14 im Plattensitz fixiert. Eine von der Klemmschraube 14 ausgeübte Klemmkraft wirkt vorwiegend entlang der Längsachse L3 des Werkzeughalters. Im montierten Zustand verläuft die Oberseite 10 der Schneidplatte 7 quer zur Längsachse L3 des Werkzeughalters 4. Insbesondere und wie hier gezeigt ist die Oberseite 10 senkrecht zur Längsachse L3.

Für das erfindungsgemäße Werkzeugsystem 1 ist die gezeigte Anordnung, wonach der Plattensitz 6 und die eingesetzte Schneidplatte 7 so angeordnet sind, dass die Oberseite 10 der Schneidplatte 7 senkrecht zur Längsachse L3 des Werkzeughalters 4 verläuft, besonders vorteilhaft.

Die Schneidplatte 7 und der Werkzeughalters 4 sind so bemessen und angeordnet, dass wenigstens eine Schneidecke 8 und beidseitig daran anschließende Schneidkanten 9 zumindest abschnittsweise über einen Außenumfang der Stirnseite des Werkzeughalters 4 hervorstehen.

Weiter bevorzugt und wie in diesem Beispiel gezeigt steht der gesamte von Schneidkanten 9 gebildete Außenumfang der Schneidplatte 7 über den Außenumfang des Werkzeughalters 4 hervor. In anderen Worten überragt die Schneidplatte 7 den Plattensitz 6 entlang dessen gesamten Umfangs.

Damit ist die Schneidplatte 7 entlang ihres gesamten Umfangs grundsätzlich nutzbar. Derart kann die Schneidplatte 7 in ein und derselben Montagesituation am Plattensitz 6 belassen werden, wenn durch Betätigung des Werkzeugsystems 1 andere Schneidecken 8 und / oder Schneidkanten 9 für einen nächsten Bearbeitungsschritt verwendet werden sollen.

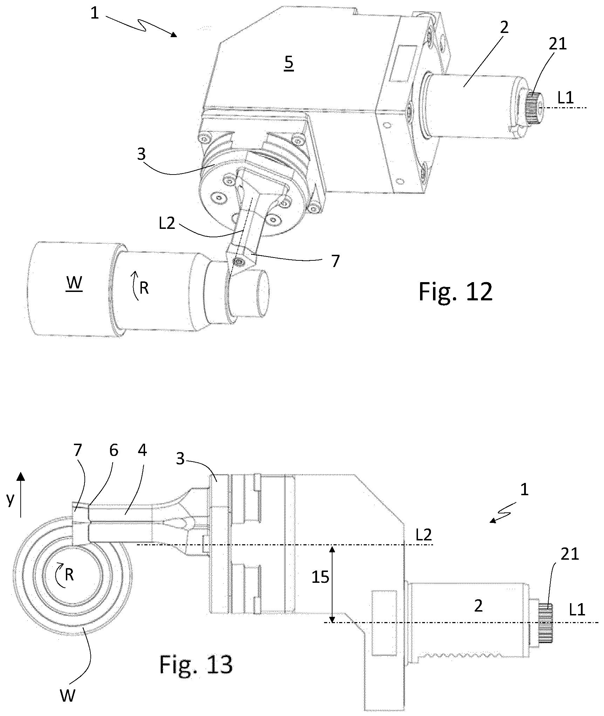

Figur 12 zeigt ein Werkzeugsystem 1 in einer Ausführungsform, bei welcher die Längsachse L1 des maschinenseitigen Schafts 2 im Wesentlichen senkrecht zur Längsachse L2 des werkzeugseitigen Schafts 3 verläuft. Diese Ausgestaltung des Werkzeugsystems 1 ist besonders vorteilhaft für einen Einsatz mit stirnseitiger, also axialer Anordnung an einem Werkzeugträger, beispielsweise an einem Werkzeugrevolver mit stirnseitigen Werkzeugaufnahmen, einem sogenannten Scheibenrevolver.

Figur 13 zeigt ein Werkzeugsystem 1 in einer alternativen Ausführungsform, bei welcher die Längsachse L1 des maschinenseitigen Schafts 2 parallel und mit einem lateralen Versatz 15 zur Längsachse L2 des werkzeugseitigen Schafts 3 verläuft. Diese Ausgestaltung des Werkzeugsystems 1 ist besonders vorteilhaft für einen Einsatz mit umfangsseitiger, also radialer Anordnung an einem Werkzeugträger, beispielsweise an einem Werkzeugrevolver mit radial angeordneten Werkzeugaufnahmen, einem sogenannten Sternrevolver. Eine solche gekröpfte Ausgestaltung kann vorteilhaft sein in Fällen, bei denen ein Verfahrweg der Werkzeugaufnahme in y-Richtung beschränkt ist. Man kann dann mit dem Werkzeugsystem 1 zunächst auf einen Anschlag in negativer y-Richtung fahren und hat dann in positiver y-Richtung den doppelten Verfahrweg zur Verfügung. Dies gestattet größeren Spielraum hinsichtlich maximal zulässiger Werkstückdurchmesser.

In den gezeigten Beispielen fällt eine Längsachse des Mittels 21 zur Übertragung einer von der angetriebenen Werkzeugaufnahme abgreifbaren Drehbewegung mit der Längsachse L1 des maschinenseitigen Schafts 2 zusammen.

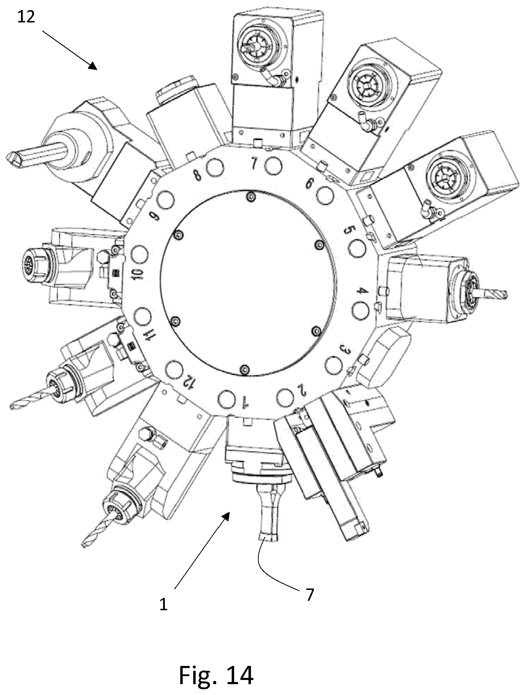

Figur 14 zeigt einen Werkzeugträger 12 mit mehreren Werkzeugaufnahmen. Entsprechend den Ausführungen weiter oben wird zwischen radialen und axialen Anordnungen an einem Werkzeugträger unterschieden.

Der Werkzeugträger ist hier als Werkzeugrevolver 12 mit radial angeordneten Werkzeugplätzen ausgeführt. Man spricht in diesem Fall auch von einem Sternrevolver.

Durch Drehen der Revolverscheibe kann das gerade benötigte Werkzeug in eine Einsatzposition geschwenkt werden. Das erfindungsgemäße Werkzeugsystem 1 ist am Werkzeugrevolver 12 umfangsseitig, also radial angeordnet.

Das Werkzeugsystem 1 ist bevorzugt gemäß dem in Figur 13 beschriebenen Ausführungsbeispiel ausgestaltet.

Der Werkzeugrevolver 12 ist als angetriebene Werkzeugaufnahme ausgeführt, deren Antrieb vom Werkzeugsystem 1 zur Verstellung der Ausrichtung der daran befestigten Schneidplatte 7 nutzbar ist, wie vorstehend beschrieben.

Ist ein Werkzeugrevolver für eine stirnseitige, also axiale Aufnahme von Werkzeugen ausgebildet, spricht man von einem Scheibenrevolver (hier nicht gezeigt). Für diesen Fall ist eine Ausgestaltung des Werkzeugsystems 1 nach dem anhand Figur 12 beschriebenen Ausführungsbeispiel besonders vorteilhaft.

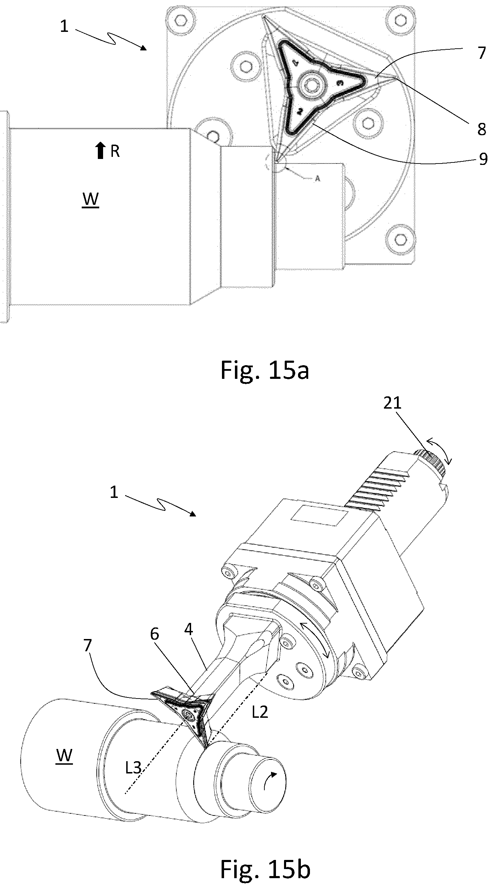

Figuren 15a und 15b zeigen eine Ausführungsform des Werkzeugsystems 1 mit einer Schneidplatte 7 in einer weiteren Alternative.

Die Schneidplatte 7 weist eine Grundform eines gleichseitigen Dreiecks auf. Eine Grundform eines gleichseitigen Dreiecks erlaubt beispielsweise ein Indexieren der Schneidplatte 7 durch eine Drehung von 120°, wobei aufgrund der drei-zähligen Symmetrie die geometrischen Verhältnisse dabei unverändert bleiben. Durch das erfindungsgemäße Werkzeugsystem 1 kann von einer Schneidecke 8 auf eine andere, beispielsweise unverbrauchte Schneidecke 8 besonders einfach gewechselt werden, ohne dass dafür die Schneidplatte 7 vom Plattensitz 6 gelöst werden muss.

Ebenfalls zu erkennen ist, dass die Schneidecken 8 und Schneidkanten 9 den Plattensitz 6 überragen, das heißt in radialer Richtung bezüglich der Längsachse L3 des Werkzeughalters 4 über einen Außenumfang der Stirnseite des Werkzeughalters 4 hervorstehen.

Es könnte auch vorgesehen sein, dass nicht alle Schneidecken 8 den Plattensitz 6 überragen, sondern - im Falle einer Dreiecksplatte - nur eine oder zwei Schneidecken 8. Es ist jedoch für alle Ausführungsformen von Vorteil, wenn sämtliche Schneidecken 8 und Schneidkanten 9 den Plattensitz 6 überragen, denn dann können alle Schneidecken 8 und Schneidkanten 9 durch Drehung des Werkzeughalters 4 für eine Bearbeitung genutzt werden, ohne dass die Schneidplatte 7 vom Plattensitz 6 gelöst und weitergedreht (indexiert) werden muss.

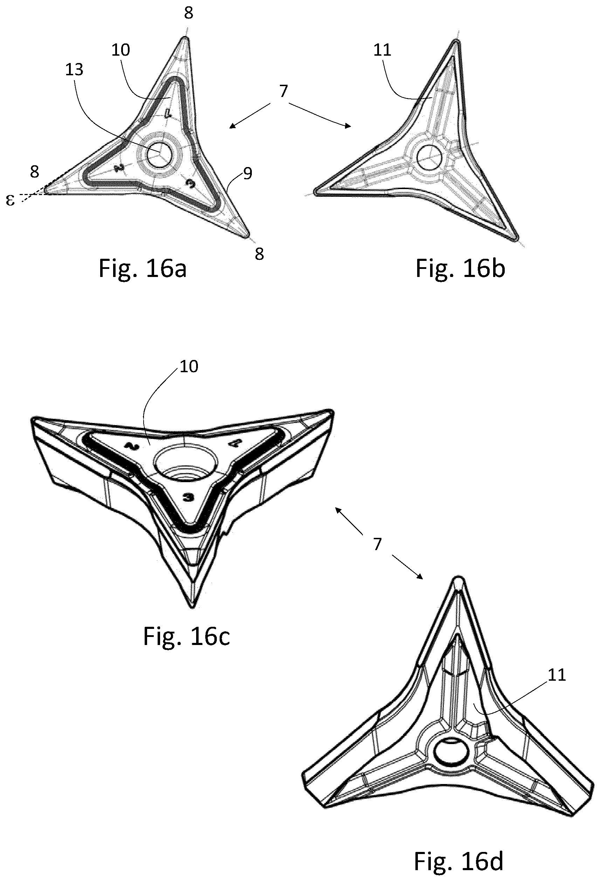

Figuren 16a bis 16d zeigen die Schneidplatte 7 von Figuren 15a und 15b im Detail.

Figur 16a zeigt eine Draufsicht auf die Oberseite 10, Figur 16b eine Unteransicht auf die Unterseite 11, Figur 16c eine perspektivische Ansicht mit Blick auf die Oberseite 10, Figur 16d eine perspektivische Ansicht mit Blick auf die Unterseite 11.

Die Oberseite 10 ist als Spanfläche ausgebildet, die Unterseite 11 ist als Anlagefläche für eine Befestigung am Plattensitz 6 ausgebildet. Die Oberseite 10 und die Unterseite 11 sind parallel zueinander. Die Schneidplatte 7 verjüngt sich von der Oberseite 10 zur Unterseite 11, wodurch sich eine deutlich positive Geometrie der Schneidkanten 9 und Schneidecken 8 ergibt.

Die Schneidplatte 7 weist eine drei-zählige Symmetrie auf. Durch eine Drehung um 120° kann die Schneidplatte 7 auf eine nächste Schneidecke 8 gedreht werden.

In der hier gezeigten Schneidplatte 7 sind die Schneidkanten bezüglich einer Draufsicht auf eine Oberseite 10 konkav ausgebildet. Das heißt, die Schneidkanten 9 sind radial zur Mitte der Schneidplatte 7 hin eingezogen. Damit wird eine Ausbildung eines besonders kleinen Spitzenwinkels ε an einer Schneidecke 8 ermöglicht, wie es für ein Kopierdrehen günstig ist.

Diese Ausgestaltung ist sehr vorteilhaft für Kopieroperationen oder zum Schlichten und Arbeiten in schmalen Nuten.

Es können abweichend von der hier gezeigten Schneidplatte 7 auch unterschiedlich große Eckenradien an verschiedenen Schneidecken 8 vorgesehen sein.

Liste der verwendeten Bezugszeichen:
- 1: Werkzeugsystem
- 2: maschinenseitiger Schaft
- 21: Mittel zur Übertragung der Drehbewegung
- 3: werkzeugseitiger Schaft
- 4: Werkzeughalter
- 5: Getriebe
- 6: Plattensitz
- 7: Schneidplatte
- 8, 81, 82...: Schneidecke(n)
- 9, 91, 92...: Schneidkante(n)
- 10: Oberseite der Schneidplatte
- 11: Unterseite der Schneidplatte
- 12: Werkzeugträger
- 13: Durchgangsloch
- 14: Klemmschraube
- 15: Versatz
- 16: Spanleitstufe
- L1: Längsachse des maschinenseitigen Schafts
- L2: Längsachse des werkzeugseitigen Schafts bzw. des Mittels zur Übertragung der Drehbewegung
- L3: Längsachse des Werkzeughalters
- SEM: Schneideckenradiusmittelpunkt
- V: Vorschub
- W: Werkstück
- WL: Werkstücklängsachse

## Patentansprüche

1. Werkzeugsystem (1), umfassend
- einen maschinenseitigen Schaft (2) mit einer Längsachse (L1), der in eine angetriebene Werkzeugaufnahme einbringbar ausgebildet ist, der maschinenseitige Schaft (2) enthaltend ein Mittel (21) zur Übertragung einer von der angetriebenen Werkzeugaufnahme abgreifbaren Drehbewegung,
- einen werkzeugseitigen Schaft (3) mit einer Längsachse (L2), der als Werkzeughalter (4) ausgebildet ist oder an dem ein Werkzeughalter (4) lösbar verbunden ist,
- ein Getriebe (5) angeordnet zwischen dem maschinenseitigen Schaft (2) und dem werkzeugseitigen Schaft (3), welches Getriebe (5) dazu ausgebildet ist, eine vom Mittel (21) übertragene Drehbewegung untersetzt auf den werkzeugseitigen Schaft (3) zu übertragen,
- wenigstens einen am Werkzeughalter (4) ausgebildeten Plattensitz (6) zur Aufnahme einer auswechselbaren Schneidplatte (7),
**dadurch gekennzeichnet, dass** der Plattensitz (6) an einer sich quer zu einer Längsachse (L3) des Werkzeughalters (4) erstreckenden Stirnseite des Werkzeughalters (4) ausgebildet ist, wobei die Längsachse (L2) des werkzeugseitigen Schafts (3) und die Längsachse (L3) des Werkzeughalters (4) zusammenfallen oder wenigstens parallel zueinander verlaufen und der Werkzeughalter (4) um die Längsachse (L2) des werkzeugseitigen Schafts (3) dreh- oder schwenkbar ist, und wobei am Plattensitz (6) eine auswechselbare Schneidplatte (7) umfassend wenigstens eine Schneidecke (8) mit einer als Spanfläche ausgebildeten Oberseite (10) und einer als Anlagefläche ausgebildeten Unterseite (11) angeordnet ist derart, dass die Oberseite (10) der Schneidplatte (7) sich quer zur Längsachse (L3) des Werkzeughalters (4) erstreckt.

2. Werkzeugsystem nach Anspruch 1, wobei das Getriebe (5) dazu ausgebildet ist, eine vom Mittel (21) übertragene Drehbewegung mit einer Untersetzung zwischen 50:1 bis 1000:1, bevorzugt zwischen 75:1 und 125:1, weiter bevorzugt etwa 100:1, auf den werkzeugseitigen Schaft (3) zu übertragen.

3. Werkzeugsystem (1) nach einem der vorangegangenen Ansprüche, wobei das Getriebe (5) als Spannungswellengetriebe ausgebildet ist.

4. Werkzeugsystem (1) nach Anspruch 3, wobei die Längsachse (L2) des werkzeugseitigen Schafts (3) durch einen Schneideckenradiusmittelpunkt (SEM) einer Schneidecke (8) der Schneidplatte (7) verläuft.

5. Werkzeugsystem (1) nach Anspruch 3 oder 4, wobei die Schneidplatte (7) wenigstens zwei voneinander verschiedene Schneidkanten (9) aufweist.

6. Werkzeugsystem (1) nach einem der vorangegangenen Ansprüche, wobei der maschinenseitige Schaft (2) als eine DIN 69880 / DIN ISO 10889 kompatible Werkzeugaufnahme ausgebildet ist.

7. Verfahren zur Bearbeitung eines Werkstücks (W) mit einem Werkzeugsystem (1) umfassend
- einen maschinenseitigen Schaft (2), der in eine angetriebene Werkzeugaufnahme einbringbar ausgebildet ist, der maschinenseitige Schaft (2) enthaltend ein Mittel (21) zur Übertragung einer von der angetriebenen Werkzeugaufnahme abgreifbaren Drehbewegung,
- einen werkzeugseitigen Schaft (3), der als Werkzeughalter (4) ausgebildet ist oder an dem ein Werkzeughalter (4) lösbar verbunden ist,
- ein Getriebe (5) angeordnet zwischen dem maschinenseitigen Schaft (2) und dem werkzeugseitigen Schaft (3), welches Getriebe (5) dazu ausgebildet ist, eine vom Mittel (21) übertragene Drehbewegung untersetzt auf den werkzeugseitigen Schaft (3) zu übertragen,
- wenigstens einen am Werkzeughalter (4) ausgebildeten Plattensitz (6) mit einer darin aufgenommenen auswechselbaren Schneidplatte (7),
wobei das Verfahren die Schritte aufweist:
- Rotieren des Werkstücks (W) um eine Werkstückachse (WL),
- Verändern einer Ausrichtung der Schneidplatte (7), indem eine Drehbewegung vom Mittel (21) zur Übertragung der Drehbewegung über das Getriebe (5) untersetzt auf den die Schneidplatte (7) tragenden Werkzeughalter (4) übertragen wird, **dadurch gekennzeichnet, dass** der Plattensitz (6) an einer sich quer zu einer Längsachse (L3) des Werkzeughalters (4) erstreckenden Stirnseite des Werkzeughalters (4) ausgebildet ist und die zerspanende Bearbeitung einer Oberfläche des Werkstücks (W) mit der Schneidplatte (7) derart erfolgt, dass die als Spanfläche ausgebildete Oberseite (10) der Schneidplatte (7) im Wesentlichen senkrecht zur Längsachse (L3) des Werkzeughalters (4) steht.

8. Verfahren nach Anspruch 7, wobei die Veränderung der Ausrichtung der Schneidplatte (7) erfolgt, während sich die Schneidplatte (7) außerhalb eines Eingriffs mit dem Werkstück (W) befindet.

9. Verfahren nach Anspruch 7, wobei die Veränderung der Ausrichtung der Schneidplatte (7) erfolgt, während sich die Schneidplatte (7) im Eingriff mit dem Werkstück (W) befindet.

10. Verfahren nach einem der vorangehenden Ansprüche 7 bis 9, wobei die Veränderung der Ausrichtung der Schneidplatte (7) durch Drehung des Werkzeughalters (4) derart erfolgt, dass ein Anstellwinkel (κ) einer aktiven zerspanenden Schneidkante (9) der Schneidplatte (7) verändert wird.

11. Verfahren nach einem der vorangehenden Ansprüche 7 bis 10, wobei eine zur Drehung des Werkzeughalters (4) koordinierte Translationsbewegung (TL) des Werkzeughalters (4) parallel zur Werkstückachse (WL) erfolgt.

12. Verfahren nach einem der vorangehenden Ansprüche 7 bis 10 unter Verwendung eines Werkzeugsystems (1) nach einem der Ansprüche 1-6.

13. Verwendung eines Werkzeugsystems (1) nach einem der Ansprüche 1 bis 6, um bei einer Bearbeitung eines Werkstücks (W) eine Ausrichtung einer Schneidkante (9) einer Schneidplatte (7) zu verändern.

## Claims

1. Tool system (1), comprising
- a machine-side shank (2) having a longitudinal axis (L1), which is configured to be insertable into a driven tool receptacle, the machine-side shank (2) containing a means (21) for transmitting a rotating movement capable of being tapped from the driven tool receptacle,
- a tool-side shank (3) having a longitudinal axis (L2), which is configured as a tool holder (4) or to which a tool holder (4) is releasably connected,
- a gear mechanism (5) arranged between the machine-side shank (2) and the tool-side shank (3), which gear mechanism (5) is configured to transmit, in reduced form, a rotating movement transmitted by the means (21) to the tool-side shank (3),
- at least one insert seat (6) configured on the tool holder (4) for receiving an indexable cutting insert (7),
**characterized in that** the insert seat (6) is configured on an end face of the tool holder (4) extending transversely to a longitudinal axis (L3) of the tool holder (4), wherein the longitudinal axis (L2) of the tool-side shank (3) and the longitudinal axis (L3) of the tool holder (4) coincide or at least extend parallel to one another and the tool holder (4) is rotatable or pivotable about the longitudinal axis (L2) of the tool-side shank (3), and wherein an indexable cutting insert (7) comprising at least one cutting corner (8) with an upper side (10) configured as a rake face and a lower side (11) configured as a bearing face is arranged on the insert seat (6) such that the upper side (10) of the cutting insert (7) extends transversely to the longitudinal axis (L3) of the tool holder (4).

2. Tool system according to claim 1, wherein the gear mechanism (5) is configured to transmit a rotating movement transmitted by the means (21) to the tool-side shank (3) with a reduction ratio of between 50:1 and 1000:1, preferably between 75:1 and 125:1, more preferably about 100:1.

3. Tool system (1) according to one of the preceding claims, wherein the gear mechanism (5) is configured as a strain wave gear.

4. Tool system (1) according to claim 3, wherein the longitudinal axis (L2) of the tool-side shank (3) runs through a cutting corner radius center (SEM) of a cutting corner (8) of the cutting insert (7).

5. Tool system (1) according to claim 3 or 4, wherein the cutting insert (7) has at least two mutually different cutting edges (9).

6. Tool system (1) according to one of the preceding claims, wherein the machine-side shank (2) is configured as a tool receptacle compatible with DIN 69880 / DIN ISO 10889.

7. Method for machining a workpiece (W) with a tool system (1) comprising
- a machine-side shank (2), which is configured to be insertable into a driven tool receptacle, the machine-side shank (2) containing a means (21) for transmitting a rotating movement capable of being tapped from the driven tool receptacle,
- a tool-side shank (3), which is configured as a tool holder (4) or to which a tool holder (4) is releasably connected,
- at least one insert seat (6) configured on the tool holder (4), with an indexable cutting insert (7) received therein,
the method comprising the steps of:
- rotating the workpiece (W) about a workpiece axis (WL),
- changing an alignment of the cutting insert (7) by transmitting a rotating movement from the means (21) for transmitting the rotating movement via the gear mechanism (5), in reduced form, to the tool holder (4) carrying the cutting insert (7),
**characterized in that** the insert seat (6) is configured on an end face of the tool holder (4) extending transversely to a longitudinal axis (L3) of the tool holder (4), and chip-removing machining of a surface of the workpiece (W) with the cutting insert (7) is carried out such that the upper side (10) of the cutting insert (7), configured as a rake face, is oriented substantially perpendicular to the longitudinal axis (L3) of the tool holder (4).

8. Method according to claim 7, wherein the change in the alignment of the cutting insert (7) is carried out while the cutting insert (7) is disengaged from the workpiece (W).

9. Method according to claim 7, wherein the change in the alignment of the cutting insert (7) is carried out while the cutting insert (7) is engaged with the workpiece (W).

10. Method according to one of claims 7 to 9, wherein the change in the alignment of the cutting insert (7) is carried out by rotating the tool holder (4) such that an angle of attack (κ) of an active chip-removing cutting edge (9) of the cutting insert (7) is changed.

11. Method according to one of claims 7 to 10, wherein a translatory movement (TL) of the tool holder (4), coordinated with the rotation of the tool holder (4), is carried out parallel to the workpiece axis (WL).

12. Method according to one of claims 7 to 10, using a tool system (1) according to one of claims 1 to 6.

13. Use of a tool system (1) according to one of claims 1 to 6 for changing an alignment of a cutting edge (9) of a cutting insert (7) when machining a workpiece (W).

## Revendications

1. Système d'outil (1), comprenant :
- une tige côté machine (2) présentant un axe longitudinal (L1), conçue de manière à pouvoir être introduite dans un logement d'outil entraîné, la tige côté machine (2) contenant un moyen (21) destiné à transmettre un mouvement de rotation pouvant être prélevé à partir du logement d'outil entraîné,
- une tige côté outil (3) présentant un axe longitudinal (L2), qui est réalisée sous la forme d'un porte-outil (4) ou à laquelle un porte-outil (4) est relié de manière amovible,
- un engrenage (5) disposé entre la tige côté machine (2) et la tige côté outil (3), lequel engrenage (5) est conçu pour transmettre à la tige côté outil (3), avec réduction, un mouvement de rotation transmis par le moyen (21),
- au moins un siège de plaquette (6) réalisé sur le porte-outil (4) pour recevoir une plaquette de coupe interchangeable (7),
**caractérisé en ce que** le siège de plaquette (6) est réalisé sur un côté frontal du porte-outil (4) s'étendant transversalement à un axe longitudinal (L3) du porte-outil (4), l'axe longitudinal (L2) de la tige côté outil (3) et l'axe longitudinal (L3) du porte-outil (4) étant confondus ou s'étendant au moins parallèlement l'un à l'autre, et le porte-outil (4) étant rotatif ou pivotant autour de l'axe longitudinal (L2) de la tige côté outil (3), et une plaquette de coupe interchangeable (7) comprenant au moins un coin de coupe (8) présentant un côté supérieur (10) réalisé en tant que surface de coupe et un côté inférieur (11) réalisé en tant que surface d'appui étant disposée sur le siège de plaquette (6) de telle sorte que le côté supérieur (10) de la plaquette de coupe (7) s'étende transversalement à l'axe longitudinal (L3) du porte-outil (4).

2. Système d'outil selon la revendication 1, dans lequel l'engrenage (5) est conçu pour transmettre à la tige côté outil (3) un mouvement de rotation transmis par le moyen (21) avec une réduction comprise entre 50:1 et 1000:1, de préférence entre 75:1 et 125:1, de manière davantage préférée d'environ 100:1.

3. Système d'outil (1) selon l'une des revendications précédentes, dans lequel l'engrenage (5) est réalisé sous la forme d'un engrenage à ondes de déformation.

4. Système d'outil (1) selon la revendication 3, dans lequel l'axe longitudinal (L2) de la tige côté outil (3) passe par un point central du rayon de coin de coupe (SEM) d'un coin de coupe (8) de la plaquette de coupe (7).

5. Système d'outil (1) selon la revendication 3 ou 4, dans lequel la plaquette de coupe (7) présente au moins deux arêtes de coupe (9) différentes l'une de l'autre.

6. Système d'outil (1) selon l'une des revendications précédentes, dans lequel la tige côté machine (2) est réalisée sous la forme d'un logement d'outil compatible avec la norme DIN 69880 / DIN ISO 10889.

7. Procédé d'usinage d'une pièce (W) à l'aide d'un système d'outil (1) comprenant :
- une tige côté machine (2), conçue de manière à pouvoir être introduite dans un logement d'outil entraîné, la tige côté machine (2) contenant un moyen (21) destiné à transmettre un mouvement de rotation pouvant être prélevé à partir du logement d'outil entraîné,
- une tige côté outil (3), qui est réalisée sous la forme d'un porte-outil (4) ou à laquelle un porte-outil (4) est relié de manière amovible,
- un engrenage (5) disposé entre la tige côté machine (2) et la tige côté outil (3), lequel engrenage (5) est conçu pour transmettre à la tige côté outil (3), avec réduction, un mouvement de rotation transmis par le moyen (21),
- au moins un siège de plaquette (6) réalisé sur le porte-outil (4), une plaquette de coupe interchangeable (7) étant reçue dans celui-ci,
le procédé comportant les étapes suivantes :
- la rotation de la pièce (W) autour d'un axe de pièce (WL),
- la modification d'une orientation de la plaquette de coupe (7), un mouvement de rotation étant transmis par le moyen (21) destiné à transmettre le mouvement de rotation, avec réduction via l'engrenage (5), au porte-outil (4) portant la plaquette de coupe (7), **caractérisé en ce que** le siège de plaquette (6) est réalisé sur un côté frontal du porte-outil (4) s'étendant transversalement à un axe longitudinal (L3) du porte-outil (4) et l'usinage par enlèvement de copeaux d'une surface de la pièce (W) est effectué à l'aide de la plaquette de coupe (7) de telle sorte que le côté supérieur (10) de la plaquette de coupe (7), réalisé en tant que surface de coupe, soit essentiellement perpendiculaire à l'axe longitudinal (L3) du porte-outil (4) .

8. Procédé selon la revendication 7, dans lequel la modification de l'orientation de la plaquette de coupe (7) est effectuée alors que la plaquette de coupe (7) se trouve hors engagement avec la pièce (W).

9. Procédé selon la revendication 7, dans lequel la modification de l'orientation de la plaquette de coupe (7) est effectuée alors que la plaquette de coupe (7) se trouve en engagement avec la pièce (W).

10. Procédé selon l'une des revendications 7 à 9 précédentes, dans lequel la modification de l'orientation de la plaquette de coupe (7) est effectuée par rotation du porte-outil (4) de telle sorte qu'un angle d'attaque (κ) d'une arête de coupe active d'usinage par enlèvement de copeaux (9) de la plaquette de coupe (7) soit modifié.

11. Procédé selon l'une des revendications 7 à 10 précédentes, dans lequel un mouvement de translation (TL) du porte-outil (4), coordonné à la rotation du porte-outil (4), est effectué parallèlement à l'axe de pièce (WL).

12. Procédé selon l'une des revendications 7 à 10 précédentes, utilisant un système d'outil (1) selon l'une des revendications 1 à 6.

13. Utilisation d'un système d'outil (1) selon l'une des revendications 1 à 6 pour modifier, lors de l'usinage d'une pièce (W), une orientation d'une arête de coupe (9) d'une plaquette de coupe (7).
